# EUROPEAN PATENT SPECIFICATION

(11) **EP 1 993 296 B1**
(45) Date of publication and mention of the grant of the patent: **16.06.2010**
(21) Application number: 07113564.4
(22) Date of filing: 31.07.2007
(51) Int. Cl.: H04Q 1/14

(54) **Telecommunication assembly with termination modules and wire guide housings**
Telekommunikationsanordnung mit Endmodulen und Drahtführungsgehäusen
Ensemble de télécommunication avec modules de terminaison et boîtiers de guide-fils

(30) Priority: 14.05.2007 US 917840 P
(43) Date of publication of application: 19.11.2008
(73) Proprietor: 3M Innovative Properties Company, St. Paul MN 55144-1000 (US)
(72) Inventor: Denter, Friedrich Wilhelm, 44575 Castrop-Rauxel (DE); Bund, Christine, 42111 Wuppertal (DE)
(74) Representative: Bergen, Katja

(56) References cited:
- EP-A- 0 249 750
- EP-A- 0 909 102
- EP-A- 1 804 522
- US-A- 5 570 422

## Description

The invention relates to a telecommunication assembly with termination modules and wire guide housings.

In the field of telecommunication, numerous customers are connected with the switch of a telecommunication company via telecommunication lines. The customers can also be called subscribers. The switch is also called an exchange. Between the subscriber and the switch, telecommunication lines are connected with telecommunication assemblies. The telecommunication assemblies establish an electrical connection between a wire which is attached to the telecommunication assembly at a first contact, and another wire which is attached to the telecommunication assembly at a second contact. Plural telecommunication assemblies can be put together at a distribution point, such as a main distribution frame, an intermediate distribution frame, an outside cabinet or an distribution point located, for example in an office building or an particular floor of an office building. To allow flexible wiring, some telecommunication lines are connected with first telecommunication assemblies in a manner to constitute a permanent connection. Flexibility is realized by so called jumpers, which flexibly connect contacts of the first telecommunication assembly with contacts of a second telecommunication assembly. These jumpers can be changed when a person moves within an office building or with his private home to provide a different telephone (i.e. a different telephone line) with a certain telephone number, which the relocated person intends to keep.

Recently, ADSL-technology has spread widely in the field of telecommunication. This technology allows at least two different signals to be transmitted on a single line. This is achieved by transmitting the different signals at different frequencies along the same line. The signals are combined at a particular point in the telecommunication line and split at another point. In particular, at the subscriber side, voice and data signals, which are separate, are combined and sent to the central office via the same line. In the central office the combined signal is split. For the transmission of voice and data signals to the subscriber, separate voice and data signals are combined at the central office, sent to the subscriber and split at the subscriber side. After splitting the signal, the so-called POTS-signal (plain old telephone service) can be used to transmit voice signals. The remaining part of the split signal can be used to transmit data, for example. So-called splitters, which are used to split or combine the signal, can generally be arranged at any distribution point. In this context, a POTS wire or POTS jumper indicates a wire, which is connected with an exchange of the telecommunication company. Furthermore, a line connection indicates a wire, which leads to the subscriber or customer. Finally, as discussed in more detail below, a DSLAM-wire means a wire which is connected with a DSLAM and thus, can, for example, transmit data. A DSLAM (Digital Subscriber Line Access Multiplexer) processes the data signal.

EP 0 647 072 A2 discloses a telecommunication assembly with contacts for connecting wires therewith. The contacts are arranged in termination modules. The telecommunication assembly also comprises wire guides being arranged in a way building a housing for the termination modules. The housing has at least one opening for receiving the termination module and at least another opening for receiving electronic components. The electronic components can be inserted in the housing contacting the termination modules at their rear side. Therefore the openings for the termination module are arranged at the front and the openings for the electronic components are arranged at the side of the housing. The wire guides are in some parts double walled. Between the two walls are arranged arc-shaped channels for receiving single wires to be guided from outside the housing to the contacts for being contacted with them.

EP 1 578 145 A1 and EP 0 9090102 A2 disclose a telecommunication assembly with contacts for connecting wires therewith. The contacts are arranged in termination modules and mounted to a carrier system so that the wires can easily be connected with the contacts. The telecommunication assembly also comprises electronic components fixed at the rear side of the termination modules. For mounting and/or demounting the electronic components to the backside of the termination modules the modules can be swivelled out of the carrier system around an axis.

FR 2 519 222 A1 discloses a telecommunication assembly with contacts for connecting wires therewith. The contacts are arranged in termination modules and mounted to a carrier system so that the wires can easily be connected to the front side of the termination modules. This telecommunication assembly also comprises wire guide housings mounted next to the termination modules for guiding the wires from the side of the telecommunication assembly to each contact in the termination module. For connecting and/or disconnecting wires to contacts at the rear side of the termination modules the termination modules together with the wire guide housings can be swivelled out of the carrier system around an axis.

EP 0 249 750 discloses a telecommunication assembly with a carrier system and termination modules. The termination modules have panels that are pivotally mounted.

There is a need for a telecommunication assembly with another concept of making access to the rear side of a termination module. Since the room where telecommunication assemblies are located becomes more and more expensive there is at the same time a need for arranging telecommunication components in a very compact manner. It is also desirable to get a telecommunication assembly where the assignment of the wires to the contacts is maintained even if the wires have to be detached from the contacts of the termination block.

The present invention provides a telecommunication assembly comprising
- a carrier system for carrying several components of the telecommunication assembly,
- at least one termination module that is attached detachably to the telecommunication assembly,
- wherein the termination module comprises contacts on the front side for connecting wires to the termination module,
- and contacts on the rear side and
- at least one wire guide housing for guiding wires to the contacts of the termination module,
- wherein the wire guide housing is pivot-mounted at the carrier system.

The telecommunication assembly according to the invention provides the possibility to swivel out the wire guide housings after the therein guided wires have been detached from the contacts of the termination modules. The wires may stay in the wire guide housing while the housing is swivelled from a closed position into an open position. Hence the invention provides an easy access to the space behind the wire guide housings while the wires are kept in their order in the wire guide housing relative to the contacts of the termination module. Accordingly the wires can be brought back to their position relative to the contacts of the termination module by swivelling the wire guide housing back into their closed position.

Telecommunication components may be contacted to the contacts on the rear side of the termination module, such as electronic and/or intelligent components as printed circuit boards for splitter modules and the like, protection components such as over voltage and or over current protectors or switches. It is also possible to contact wires to the contacts arranged at the rear side of the termination module instead of or additionally to the telecommunication components.

The carrier system according to the invention may be an U-shaped frame, e.g. a back mount frame. The use of an U-shaped frame provides the advantage of having a frame that is open on one side and provides easy access from the open side. It is also possible to use an L-shaped frame offering easy access from two sides of the frame. Another possibility is to use a specific U-shaped frame that is closed on two sides like a box that is only open on one side.

The carrier system may comprise guiding elements for cables and/or wires. Besides the wire guide housing that is arranged in the telecommunication assembly and is used for guiding wires from outside the assembly to each contact in the assembly, there is a need for guiding cables and/or wires along the longitudinal sides of the telecommunication assembly. Therefore the carrier system itself may comprise further guiding elements such as a latch hook, a ring, a ring with an opening for getting the cables and/or wires inside of the ring. It is also possible to guide the wires along the telecommunication assembly with binders, cable ties and/or hook and loop technology. Those fixing elements may engage in special recesses of the telecommunication assembly.

According to one embodiment of the invention the carrier system may comprise at least one swivel axis for a wire guide housing, e.g. to pivotally engage with a bearing on the wire guide housing. If the telecommunication assembly comprises more than one wire guide housing it is possible that all housings swivel around the same axis. According to another embodiment of the invention the carrier system may comprise two swivel axes e.g. one on each transverse side of the telecommunication assembly. If the telecommunication assembly comprises more than one wire guiding housing it is possible that a few e.g. half of the housings swivel around one axis and the rest e.g. the other half of the housings swivel around the other axis. It is also possible to arrange more than one axis on one and/or each transverse side of the telecommunication assembly. In this case it would be possible to swivel each wire guide housing around one axis. To provide a more stable swivel arrangement it is also possible to swivel one or more wire guide housings around more than one axis. According to another embodiment of the invention one wire guide housing may be fixed at two axes, each of the axes being arranged on transverse sides of the telecommunication assembly. If the bearing for the axes is constructed as a snap fit or a latch-like element it would be possible to swivel the wire guide housing either around the first axis or around the second axis of the wire guide housing depending on the requirements in each case.

According to a further embodiment of the invention the carrier system may provide means for guiding and/or fixing the telecommunication components inside of the carrier system. The fixing and/or guiding elements may be arranged inside of the U-shaped frame. All commonly known guiding elements may be used such as ribs, recesses, latches etc.. In the same way all commonly known fixing elements may be used such as wholes, recesses, slots, grooves and snap fits.

The telecommunication assembly according to embodiments of the invention may comprise a carrier system consisting of at least two parts. The carrier system may comprise an U-shaped back mount frame that may be attached to any kind of mounting system such as mounting rails or mounting frames. The U-shaped back mount frame may be out of metal, plastic or any other material that provides a stable frame and can be easily manufactured. The legs of the U-shaped back mount frame may have extensions attached there through. The extensions may comprise fixing and/or guiding elements as well as swivel axes. The extensions may be manufactured out of plastic or metal. That would have the advantage of an easy production by injection moulding together with all elements such as fixing, guiding and/or swivelling elements. The extensions may of course also be manufactured out of metal or any other material. It is also possible to use a one part back mount frame that is U-shaped and comprises all fixing and/or guiding elements.

A further embodiment of the invention may comprise a wire guide housing that is assigned to one termination module. That provides an easy way of mapping wires to a certain contact of a certain termination module. When the termination module has two rows of contacts it is possible to assign two wire guide housings to a termination module. Each wire guide housing provides guiding channels for wires to one row of contacts of the termination module and each wire guide housing is arranged on one longitudinal side of the termination module. According to a further embodiment of the invention one wire guide housing may be assigned to two termination modules e.g. when the wire guide housing is situated between two termination modules and the wire guide housing provides two separate wire guiding areas, i.e. one for each termination module. Also, wires from two or more wire guide housings could go to one row of a termination module.

In a particular embodiment the wire guide housing may comprise a receiving portion for the swivelling axis at the carrier system. The receiving portion may be in the shape of a recess and/or a bearing. Any other kind of seat or receptacle for a swivel axis may be used. The wire guide housings may be detachably attached to the swivel axis so that it is possible to detach the whole wire guide housing from the telecommunication assembly. That provides a flexible arrangement that can be adapted to changing requirements. It is also possible to arrange the axis at the wire guide housing and the seat of the axis at the carrier system.

The wire guide housing according to embodiments of the invention may also comprise fixing elements for fixing the wire guide housing in its closed position to the carrier system. The possibility of fixing the wire guide housing in its closed position to the carrier system has the advantage of providing a stable assembly where attaching, detaching and switching of wires to contacts can easily be done. The fixing elements can be snap fits that are integrated in the wire guide housing (one-piece assembly). The fixing elements can also be separate elements that have to be mounted on the wire guide housing after it has been swivelled into its closed position like screws, bolts or the like.

In a particular embodiment the wire guide housing comprises receiving portions for fixing elements of the termination module. To get access to the space behind the wire guide housings it may be necessary to take out the termination modules. Therefore the termination modules are detachably attached to the telecommunication assembly according to the invention. The termination modules may be fixed to the carrier system and/or the wire guide housing. For a better connection between a termination module and parts of the telecommunication assembly - e.g. the wire guide housing - the parts may comprise recesses for fixing elements. An easy solution for a fixing element may be a snap fit solution. Any other kind of detachable connecting solutions such as clamping joints, screws, bolts pins or the like may be used as well. Any contacts already connected to the contacts of the termination module would be needed to be disconnected from said contacts before the termination module can be removed.

The wire guide housing may comprise a demounting device to facilitate removal of the telecommunication component from the telecommunication assembly. The demounting device of the wire guide housing may interact with a demounting device at the telecommunication component. The demounting device of the wire guide housing may be designed as a nose attached to the wire guide housing showing in the direction of the telecommunication component mounted inside of the telecommunication assembly. The telecommunication component itself may also comprise a demounting device in the shape of a nose or a recess or the like. When swivelling the wire guide housing around its swivel axis the nose of the wire guide housing swivels around the axis as well and thereby interacts with the nose of the telecommunication component and pushes and/or pulls it out of the assembly. If there are any detachable fixing elements holding the telecommunication component in the telecommunication assembly the interaction of the two noses pulls the component out of these fixing elements.

The wire guide housing according to the invention may comprise a structure for guiding wires. The structure may comprise arc-shaped channels guiding the wires from the side and/or outside of the telecommunication assembly to the top of the telecommunication assembly where the contacts are arranged. The structure may be arranged between two walls. The channels are built from the two walls and the structure inside of the walls. It is also possible to use only one wall and an open arc-shaped structure. When the wire guide housing is positioned next to a termination module the outer wall of the termination module may be used as a second wall for the wire guide housing. With that solution construction costs for material may be saved. When using one wire guide housing for two adjacent termination modules the wire guide housing may comprise three walls with two arc-shaped structures or may only comprise one wall with open arc-shaped structures on both sides and using the walls of the adjacent termination modules.

According to a further embodiment of the invention the wire guide housing may comprise a short leg and a long leg being arranged in a L-shaped configuration. The wire guide housing may comprise the receiving portion for the swivel axis of the telecommunication assembly at the short leg. It may comprise a recess for fixing the termination module as well as fixing elements for fixing two wire guide housings at each other in their closed position. The short leg of the wire guide housing may comprise a handle for opening the wire guide housing. The wire guide housing may be designed as a plate with at least one wall and one guiding structure. All other arrangements of the wire guide housing as described before are possible, too.

The invention will now be described in more detail with reference to the following Figures exemplifying particular embodiments of the invention:
- Fig. 1: is a perspective view of a telecommunication assembly according to the invention with three termination modules, wire guide housings and telecommunication components;
- Fig. 2: is a perspective view of a partly disassembled telecommunication assembly shown in Fig. 1;
- Fig. 3: is a detail of the telecommunication assembly shown in Fig. 1 with a wire guide housing that is closed and attached to a carrier system;
- Fig. 4: is the same detail of the telecommunication assembly shown in Fig. 3 with a wire guide housing that is opened and is detached from the carrier system at one side;
- Fig. 5: is a perspective view of the telecommunication assembly shown in Fig. 1 with two wire guide housings that are swivelled-out;
- Fig. 6: is a perspective view of the telecommunication assembly shown in Fig. 1 with two swivelled-out wire guide housings and a detached electronic component;
- Fig. 7: is a perspective view of the telecommunication assembly shown in Fig. 1 with two swivelled-out wire guide housings and a pulled out electronic component;
- Fig. 8: is a detail of the telecommunication assembly shown in Fig. 5 with a wire guide housing being opened and detaching means at the wire guide housing interacting with detaching means of the electronic component;
- Fig. 9: is a perspective view of a L-shaped wire guide housing used in the assembly shown in Fig. 1
- Fig. 10 a, b: are schematic drawings with a side view of a further embodiment of the telecommunication assembly with wire guide housings;
- Fig. 11 a, b: are schematic drawings with a top view of the wire guide housings shown in Fig. 10a and b;
- Fig 12 a: is a schematic drawing with a top view of a further embodiment of a wire guide housing;

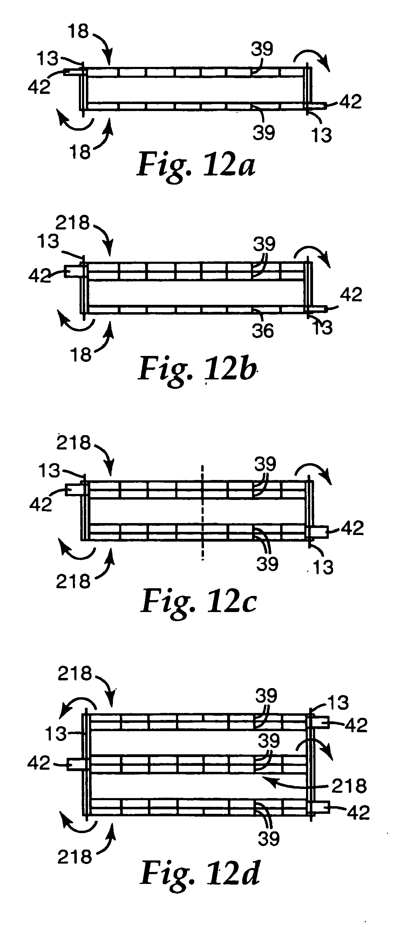

- Fig 12 b: is a schematic drawing with a top view of a further embodiment of a wire guide housing;
- Fig 12 c: is a schematic drawing with a top view of a further embodiment of a wire guide housing and
- Fig 12 d: is a schematic drawing with a top view of a further embodiment of a wire guide housing.

Herein below various embodiments of the present invention are described and shown in the drawings wherein like elements are provided with the same reference numbers.

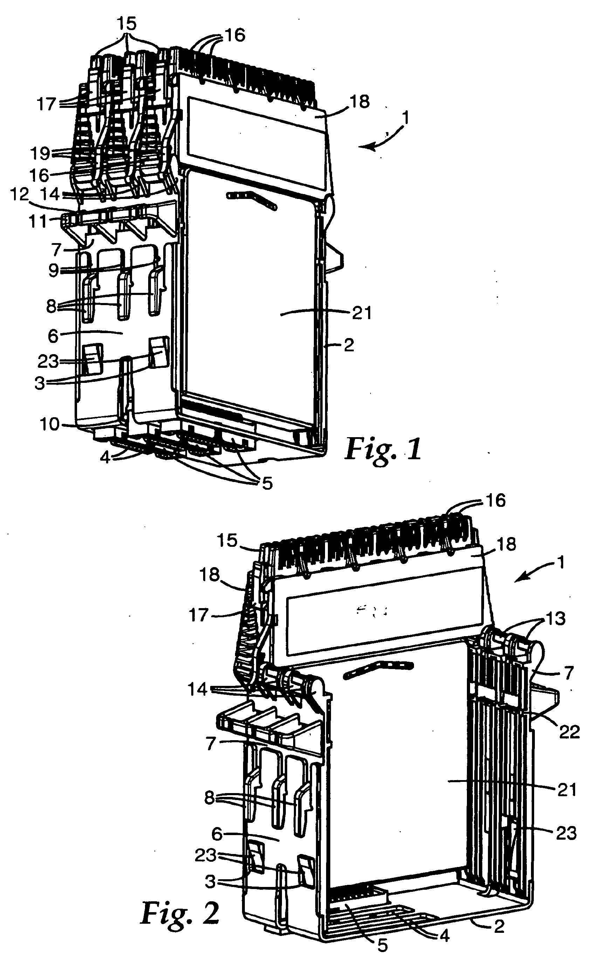

Fig. 1 shows a perspective view of a telecommunication assembly 1. The telecommunication assembly 1 consist of a U-shaped back mount frame 2 with two parallel legs 6. The back mount frame 2 is made of metal. It has openings 3 for receiving fixing elements that will be described later. The back mount frame 2 comprises a central slot 10 for positioning and/or fixing it at a mounting assembly (not shown). It also has openings 4 for receiving connectors 5. The two legs 6 of the back mount frame 2 comprise extensions 7 made out of plastic. The extensions 7 are fixed to the back mount 2 frame with clips 8 extending in elongated recesses 9. The extensions 7 also comprise guiding elements in the shape of rings 11. Each ring 11 provides a slot 12 for inserting cables and/or wires guided there through. Near the slots 12 the rings 11 are chamfered for better inserting the cables and/or wires. The extensions 7 of the back mount frame 2 also comprises swivel axes 13 (Fig. 2) being supported by a double walled bedding 14.

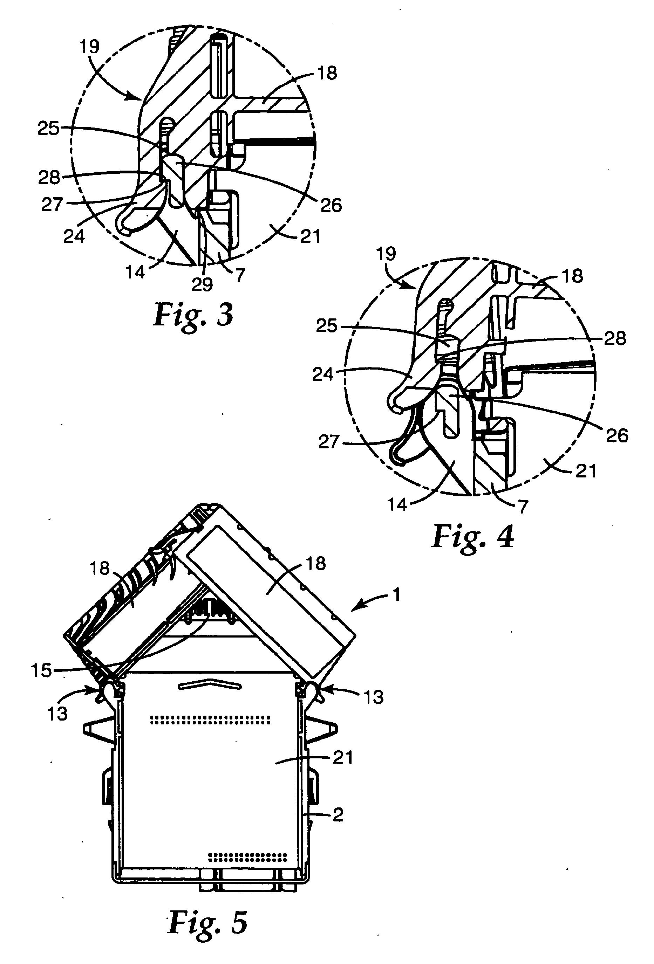

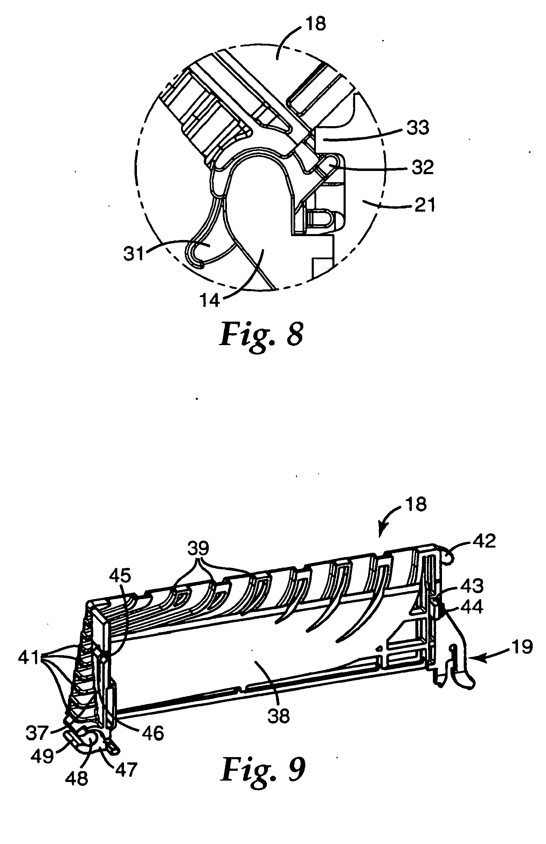

The telecommunication assembly 1 comprises beside the described U-shaped back mount frame 2 termination modules 15 each with two rows of contacts 16 at the front side (for the two rows 16 see Fig. 2). The termination modules 15 have fixing elements in the shape of elongated clips 17. The termination modules 15 are fixed at wire guide housings 18. The connection between the termination modules 15 and the wire guide housings 18 will be described in detail with reference to Fig. 9. The wire guide housings 18 are arranged on both sides of each termination module 15. The wire guide housings 18 are pivotally mounted at the swivel axes 13 of the extension 7 of the legs 6 of the U-shaped back mount frame 2. On the other side of the wire guide housing 18 a fixing and handling element 19 is provided that will be described in connection with Fig. 3, 4 and 9. Inside of the telecommunication assembly 1 at the rear side of the termination module 15 are arranged electronic components such as splitter circuits 21 only one of those components can be seen in Fig. 1. The splitter circuit 21 has contact to the rear side of the termination modules 15 as well as to the connectors 5 at the rear side of the telecommunication assembly 1. It is possible to fix the splitter circuit 21 at the termination module 15 and/or at the back mount frame 2.

Fig. 2 shows the telecommunication assembly 1 of Fig. 1 consisting of the U-shaped back mount frame 2 with two legs 6 and extensions 7 of the legs 6 of the back mount frame 2 with only one termination module 15, two wire guide housings 18 and one splitter circuit 21. As can be seen in this Figure the extensions 7 of the legs 6 of the U-shaped back mount 2 extend inside of the U-shaped back mount frame 2 covering nearly all of the inside of the legs 6 of the frame 2. They have guiding elements in the shape of grooves 22 for the splitter circuits 21. As also can be seen in Fig. 2 the extensions 7 comprise besides the clips 8 further projections 23 extending in the openings 3 for fixing the extensions 7 to the legs 6. In Fig. 2 not all connectors 5 are inserted in the back mount frame 2 so that the openings 4 in the U-shaped back mount frame 2 can be seen as well.

Fig. 3 shows a cross-sectional detail of the telecommunication assembly 1 shown in Fig. 1 with a wire guide housing 18 that is closed and attached to the extension 7 of the leg 6. In Fig. 3 is also shown a part of a splitter circuit 21 and the fixing and handling element 19 of the wire guide housing 18. The fixing and handling element 19 has a handle part 24 sticking out of the wire guide housing 18 for easy reaching/gripping by hand. The fixing and handling element 19 also comprises a recess part 25 for receiving a bolt 26 of the extension 7 of the legs 6 of the U-shaped back mount frame 2. The bolt 26 is fixed at the adjacent wire guide housing 18. The bolt 26 provides a protrusion 27 engaging behind a protrusion 28 at the handle part 24 of the fixing and handling element 19. The recess part 25 extends behind the receiving portion for the bolt 26 thereby achieving a flexibly mounted handle part 24 that provides the possibility of being moved relative to the wire guide housing 18 and thereby opening the engagement of the two protrusions 27 and 28 to allow disconnection by flexing handle 24 to widen the recess part (Fig. 4). Recess 29 helps to position the wire guide housing by engaging with the upper edge of the extension 7 of the U-shaped back mount frame 2 when the wire guide housing 18 is in its closed position.

Fig. 5 shows a perspective view of the telecommunication assembly 1 shown in Fig. 1 with two wire guide housings 18 that are swivelled out. The wire guide housings 18 are swivelled out in opposite directions since the swivel axes 13 are arranged on opposite sides of the telecommunication assembly 1. It is also possible to arrange the swivel axes 13 on one side of the telecommunication assembly 1 so that all wire guide housings 18 are swivelled to one side. In order to open the wire guide housings 18 the termination module 15 is removed. Any wires connected to contacts of the termination module 15 need to be disconnected. The clips 17 (see Fig. 1 and Fig. 2) of the termination module 15 have to be removed from the wire guide housings 18 in order to remove the termination module 15 from the wire guide housing 18. The termination module 15 that can be seen in Fig. 5 is the one behind the wire guide housings 18 that are swivelled out. As can not be seen very well in Fig. 5 but will be described in detail with reference to Fig. 8 when swivelling out the wire guide housings a part of it engages with the splitter circuit 21 inside of the telecommunication assembly 1 thereby pulling it out of the assembly 1.

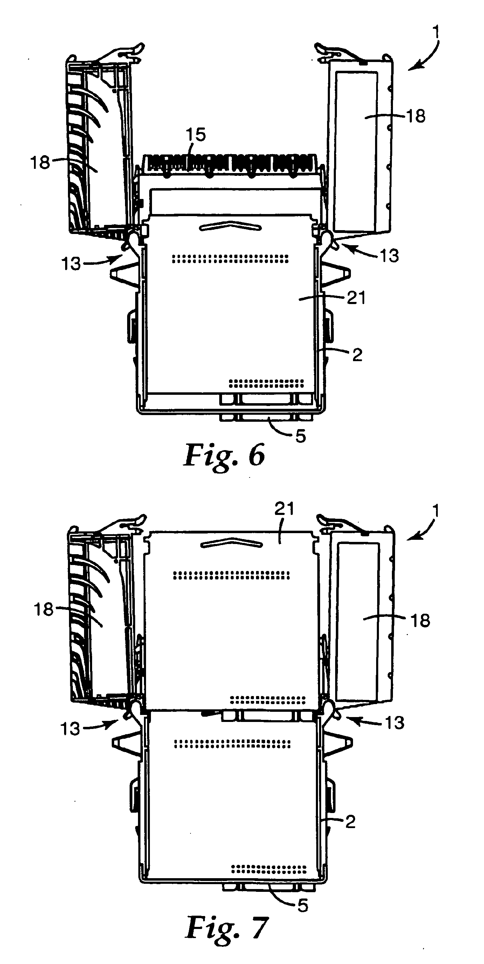

In Fig. 6 is shown the telecommunication assembly 1 of Fig. 5 with wire guide housings 18 in their swivelled-out position. The splitter circuit 21 is pulled out a little bit and does not contact the connector 5 any more. The splitter circuit 21 can now easily be pulled further out of the telecommunication assembly 1 by hand (see Fig. 7). The swivelling out of the wire guide housing facilitates the removal of the splitter circuit from the back mount frame.

Fig. 8 shows a detail of the telecommunication assembly 1 shown in Fig. 5. One side of the two walled bedding 14 carries the swivel axis 13 (not shown). It is shown the part of the wire guide housing 18 in its swivelled-out position that comprises a receiving portion 31 for the axis 13. At the inner side of the receiving portion 31 the wire guide housing 18 comprises a demounting device in the shape of a nose 32. The nose 32 has such a length that it engages with a corresponding tab 33 on the splitter circuit 21 inside of the telecommunication assembly 1. When swivelling the wire guide housing 18 around the axis 13 the nose 32 swivels together with the wire guide housing 18 around the axis 13 thereby interacting with the tab 33 on the splitter 21 and pushing it together with the splitter circuit 21 out of the telecommunication assembly 1.

Fig. 9 shows a perspective view of a L-shaped wire guide housing 18 used in the assembly shown in Fig. 1. The wire guide housing 18 comprises a short leg 37 and a long leg 38 that are arranged at a right angle to each other. In the assembled stage two identical wire guide housings 18 are assigned to each other. They enclose a rectangular space where a termination module 15 can be inserted. The space is bounded by two parallel long legs 38 and two parallel short legs 37. The long leg 38 comprises an arc shaped guiding structure 39 for guiding wires in the form of channel like structures on the surface of the long leg 38. The arc shaped guiding structure 39 extends from the side of the long leg 38 of the wire guide housing 18 to the top of the long leg 38 of the wire guide housing 18. The arc shaped guiding structure 39 is partly covered by a wall. Alternatively, depending on the structure of the termination module 15 being arranged next to the wire guide housing 18, it is not necessary to cover the arc shaped guiding structure.

Entrance areas 41 for the channels of the guiding structure 39 are provided at the side of the long leg 38. The entrance areas 41 are designed for an easy entry of wires into the guiding structure 39. The long leg 38 of the wire guide housing 18 also comprises a handle 42 for opening and/or closing the wire guide housing 18. The handle 42 is arranged at the top of the wire guide housing 18 next to the exits of the guiding structure 39. At the bottom of the wire guide housing 18 is arranged the fixing and handling element 19 that was already described in detail with reference to Fig. 3. Between the fixing and handling element 19 and the handle 42 on the long leg 38 of the wire guide housing 18, a protrusion 43 with a nose 44 is provided. The protrusion 43 is arranged parallel to the short leg 37 and the nose extends way from the short leg 37 and the wire guide housing 18.

The short leg 37 of the wire guide housing 18 comprises a groove 45 for receiving the clip 17 of the termination module 15. It also comprises a slot 46 for receiving the nose 44 of the adjacent wire guide housing 18. Nose 44 and slot 46 engage each other when two adjacent wire guide housings 18 are in there closed position to secure the two adjacent wire guide housings to each other. At the bottom of the short leg is arranged a bearing 47 for receiving a swivel axis 13. The bearing comprises a receiving portion 48 for the axis 13 with a round cross section and an opening 49 for inserting the axis 13.

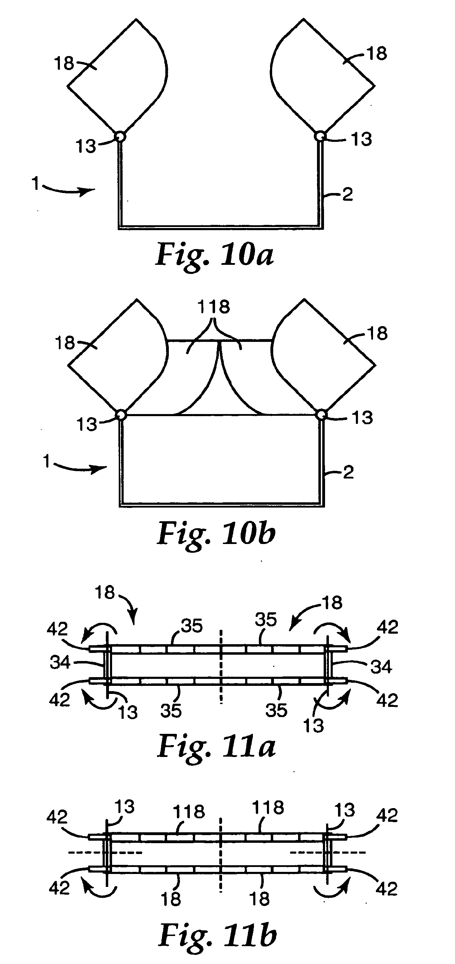

Fig. 10 a shows a schematic drawing of a telecommunication assembly 1 with a back mount frame 2, wire guide housings 18 and two swivel axes 13, one on the left end and one on the right end of the front side of the telecommunication assembly 1. The embodiment shown in Fig. 10 a differs from the before described embodiments in that the wire guide housing 18 is divided in the middle into two parts. Each part of the wire guide housing 18 can be swivelled around its own axis into opposite directions.

Fig. 10b is also a schematic drawing of a telecommunication assembly 1 with a back mount frame 2, wire guide housings 18 and 118 and two swivel axes 13. The difference between the embodiment shown in Fig. 10a and the embodiment shown in Fig. 10b is explained with reference to Fig. 11 a and Fig. 11 b. Fig. 11a corresponds to Fig. 10a and Fig. 11b corresponds to Fig. 10b. In the embodiment shown in Fig. 10a and Fig. 11 a the two wire guide housings 18 - the first one can be swivelled around the left axis 13 and the second one can be swivelled around the right axis 13 - are U-shaped. Both have a base portion 34 and two legs 35. When swivelling the wire guide housing 18 of Fig. 10 a and Fig. 11 a both legs 35 of a wire guide housing 18 swivel together that means parallel around the axis 13. The wire guide housing shown in Fig. 10b and Fig. 11b differs in that the wire guide housings 18 and 118 are not connected with each other. Each wire guide housing 18 can swivel independently around the axis 13. In Fig. 10b the front wire guide housings 18 are shown in their swivelled-out positions while the wire guide housings 118 are shown in their swivelled-in positions. In Fig. 11 a and b can be seen the handles 42 for opening the wire guide housings 18.

Fig. 12a to Fig. 12c are schematic drawings of a further embodiment of wire guide housings. Fig. 12a does show the concept of the wire guide housing 18 of the telecommunication assembly 1 of Fig. 1. The wire guide housings 18 each comprise one row with an arc shaped guiding structure 39. Each wire guide housing 18 swivels around an axis 13. The axes 13 are arranged at opposite sides of the telecommunication assembly. Fig. 12b shows a wire guide housing 218 with two rows of arc shaped guiding structures 39 and another wire guide housing 18 with only one row of arc shaped guiding structure 39. In Fig. 12c both wire guiding housings 218 comprises two rows of arc shaped guiding structures 39. The wire guide housings described with reference to Fig. 12a to Fig. 12c could be L-shaped or only flat. They all comprise handles 42 for easy opening and/or closing the wire guide housings 18.

Yet another embodiment of a wire guide housing assembly is shown in Fig. 12d. It shows three wire guide housings 218 each with two rows of arc shaped guiding structures 39. Each of the wire guide housings 218 swivels around an own axis 13. It is also possible to connect wire guide housings 218 such that their axis 13 is on the same side so they swivel together around the axis 13. In the shown embodiment the two outer wire guide housings 218 are connected and form an U-shaped wire guide housing assembly. All wire guide housings comprise handles 42 for easy opening and/or closing the wire guide housings 18.

### REFENCE NUMBERS

- 1: telecommunication assembly
- 2: back mount frame
- 3: opening
- 4: opening
- 5: connector
- 6: leg
- 7: extension
- 8: clip
- 9: elongated recess
- 10: slot
- 11: ring
- 12: slot
- 13: swivel axis
- 14: bedding
- 15: termination module
- 16: contact
- 17: clip
- 18: wire guide housing
- 19: fixing and handling element
- 21: splitter circuit
- 22: groove
- 23: projections
- 24: handle part
- 25: recess part
- 26: bolt
- 27: protrusion
- 28: protrusion
- 29: recess
- 31: receiving portion
- 32: nose
- 33: tab
- 34: base portion
- 35: leg
- 37: short leg
- 38: long leg
- 39: arc shaped guiding structure
- 41: entrance area
- 42: handle
- 43: protrusion
- 44: nose
- 45: groove
- 46: slot
- 47: bearing
- 48: receiving portion
- 49: opening

- 118: wire guide housing
- 218: wire guide housing

## Claims

1. A telecommunication assembly (1) comprising
a carrier system (2, 7) for carrying telecommunications components of the telecommunication assembly (1),
at least one termination module (15), wherein the termination module (15) comprises contacts (16) on the front side for connecting wires to the termination module (15),
and contacts on the rear side, **characterized in**
at least one wire guide housing (18) for guiding wires to the contacts (16) of the termination module (15),
wherein the wire guide housing (18) is pivotally mounted at the carrier system (2, 7) and wherein the termination module is detachably attached to the carrier system and/or the wire guide housing.

2. The telecommunication assembly according to claim 1, wherein the telecommunication components (21) are attached to the contacts on the rear side of the termination module (15).

3. The telecommunication assembly according to claim 1 or 2, wherein the carrier system (2, 7) comprises an U-shaped frame.

4. The telecommunication assembly according to any of the preceding claims, wherein the carrier system (2, 7) comprises guiding elements (11) for cables and/or wires.

5. The telecommunication assembly according to any of the preceding claims, wherein the carrier system (2, 7) comprises at least one swivel axis (13) for the wire guide housing (18).

6. The telecommunication assembly according to any of the preceding claims, wherein the carrier system (2, 7) provides means for guiding and/or fixing (22) the telecommunication components (21) inside of the carrier system (2, 7).

7. The telecommunication assembly according to any of the preceding claims, wherein the carrier system (2, 7) consists of at least two parts.

8. The telecommunication assembly according to any of the preceding claims, wherein the wire guide housing (18) is assigned to one termination module (15).

9. The telecommunication assembly according to claim 5, wherein the wire guide housing (18) comprises a receiving portion (31) for the swivel axis (13).

10. The telecommunication assembly according to any of the preceding claims, wherein the wire guide housing (18) comprises fixing and/or handling elements (19) for fixing the wire guide housing in its closed position to the carrier system (2, 7).

11. The telecommunication assembly according to any of the preceding claims, wherein the wire guide housing (18) comprises receiving portions (45) for fixing elements (17) of the termination module (15).

12. The telecommunication assembly according to any of the preceding claims, wherein the wire guide housing (18) comprises a demounting device (32) to facilitate removal of the telecommunication component (21) from the telecommunication assembly.

13. The telecommunication assembly according to any of the preceding claims, wherein the wire guide housing (18) comprises a structure (39) for guiding wires.

14. The telecommunication assembly according to claim 13, wherein the structure (39) is arranged between two walls.

15. The telecommunication assembly according to any of the preceding claims, wherein the wire guide housing (18) comprises a short leg (37) and a long leg (38) being arranged in a L-shaped configuration.

## Patentansprüche

1. Telekommunikationsanordnung (1), umfassend:
ein Trägersystem (2, 7) zum Tragen von Telekommunikationskomponenten der Telekommunikationsanordnung (1),
mindestens ein Endmodul (15), wobei das Endmodul (15) zum Verbinden von Drähten an das Endmodul (15) Kontakte (16) an der Vorderseite umfasst,
und Kontakte an der Hinterseite, **gekennzeichnet durch**
mindestens ein Drahtführungsgehäuse (18) zum Führen von Drähten zu den Kontakten (16) des Endmoduls (15),
wobei das Drahtführungsgehäuse (18) schwenkbar an dem Trägersystem (2, 7) montiert ist und wobei das Endmodul abnehmbar an dem Trägersystem und/oder dem Drahtführungsgehäuse angebracht ist.

2. Telekommunikationsanordnung nach Anspruch 1, wobei die Telekommunikationskomponenten (21) an den Kontakten an der Hinterseite des Endmoduls (15) angebracht sind.

3. Telekommunikationsanordnung nach Anspruch 1 oder 2, wobei das Trägersystem (2, 7) einen U-förmigen Rahmen umfasst.

4. Telekommunikationsanordnung nach einem der vorhergehenden Ansprüche, wobei das Trägersystem (2, 7) Führungselemente (11) für Kabel und/oder Drähte umfasst.

5. Telekommunikationsanordnung nach einem der vorhergehenden Ansprüche, wobei das Trägersystem (2, 7) mindestens eine Schwenkachse (13) für das Drahtführungsgehäuse (18) umfasst.

6. Telekommunikationsanordnung nach einem der vorhergehenden Ansprüche, wobei das Trägersystem (2, 7) Mittel zum Führen und/oder Befestigen (22) der Telekommunikationskomponenten (21) in dem Trägersystem (2, 7) bereitstellt.

7. Telekommunikationsanordnung nach einem der vorhergehenden Ansprüche, wobei das Trägersystem (2, 7) aus mindestens zwei Teilen besteht.

8. Telekommunikationsanordnung nach einem der vorhergehenden Ansprüche, wobei das Drahtführungsgehäuse (18) einem Endmodul (15) zugeordnet ist.

9. Telekommunikationsanordnung nach Anspruch 5, wobei das Drahtführungsgehäuse (18) ein Empfangsstück (31) für die Schwenkachse (13) umfasst.

10. Telekommunikationsanordnung nach einem der vorhergehenden Ansprüche, wobei das Drahtführungsgehäuse (18) Befestigungs- und/oder Handhabungselemente (19) zum Befestigen des Drahtführungsgehäuses in seiner geschlossenen Position an dem Trägersystem (2, 7) umfasst.

11. Telekommunikationsanordnung nach einem der vorhergehenden Ansprüche, wobei das Drahtführungsgehäuse (18) Empfangsstücke (45) für Befestigungselemente (17) des Endmoduls (15) umfasst.

12. Telekommunikationsanordnung nach einem der vorhergehenden Ansprüche, wobei das Drahtführungsgehäuse (18) eine Demontageeinrichtung (32) zum Erleichtern der Entfernung der Telekommunikationskomponente (21) von der Telekommunikationsanordnung umfasst.

13. Telekommunikationsanordnung nach einem der vorhergehenden Ansprüche, wobei das Drahtführungsgehäuse (18) eine Struktur (39) zur Führung von Drähten umfasst.

14. Telekommunikationsanordnung nach Anspruch 13, wobei die Struktur (39) zwischen zwei Wänden angeordnet ist.

15. Telekommunikationsanordnung nach einem der vorhergehenden Ansprüche, wobei das Drahtführungsgehäuse (18) ein kurzes Bein (37) und ein langes Bein (38), angeordnet in einer L-förmigen Konfiguration, umfasst.

## Revendications

1. Ensemble (1) de télécommunication comportant
un système (2, 7) de support servant à porter des composants de télécommunications de l'ensemble (1) de télécommunication,
au moins un module (15) de raccordement, le module (15) de raccordement comportant des contacts (16) sur la face avant pour connecter des fils au module (15) de raccordement et le module de raccordement,
et des contacts sur la face arrière, **caractérisé par** au moins un boîtier (18) guide-fils servant à guider des fils jusqu'aux contacts (16) du module (15) de raccordement,
le boîtier (18) guide-fils étant monté de façon pivotante sur le système (2, 7) de support et le module de raccordement étant fixé de manière amovible sur le système de support et/ou le boîtier guide-fils.

2. Ensemble de télécommunication selon la revendication 1, les composants (21) de télécommunication étant rattachés aux contacts sur la face arrière du module (15) de raccordement.

3. Ensemble de télécommunication selon la revendication 1 ou 2, le système (2, 7) de support comportant une armature en U.

4. Ensemble de télécommunication selon des revendications quelconques parmi les précédentes, le système (2, 7) de support comportant des éléments (11) de guidage pour des câbles et / ou des fils.

5. Ensemble de télécommunication selon des revendications quelconques parmi les précédentes, le système (2, 7) de support comportant au moins un axe (13) de pivotement pour le boîtier (18) guide-fils.

6. Ensemble de télécommunication selon des revendications quelconques parmi les précédentes, le système (2, 7) de support prévoyant un moyen de guidage et / ou de fixation (22) des composants (21) de télécommunication à l'intérieur du système (2, 7) de support.

7. Ensemble de télécommunication selon des revendications quelconques parmi les précédentes, le système (2, 7) de support étant constitué d'au moins deux parties.

8. Ensemble de télécommunication selon des revendications quelconques parmi les précédentes, le boîtier (18) guide-fils étant affecté à un module (15) de raccordement unique.

9. Ensemble de télécommunication selon la revendication 5, le boîtier (18) guide-fils comportant une partie (31) de logement destinée à l'axe (13) de pivotement.

10. Ensemble de télécommunication selon des revendications quelconques parmi les précédentes, le boîtier (18) guide-fils comportant des éléments (19) de fixation et / ou de manipulation destinés à fixer le boîtier guide-fils en position fermée sur le système (2, 7) de support.

11. Ensemble de télécommunication selon des revendications quelconques parmi les précédentes, le boîtier (18) guide-fils comportant des parties (45) de logement destinées à des éléments (17) de fixation du module (15) de raccordement.

12. Ensemble de télécommunication selon des revendications quelconques parmi les précédentes, le boîtier (18) guide-fils comportant un dispositif (32) de désassemblage pour faciliter le démontage du composant (21) de télécommunication de l'ensemble de télécommunication.

13. Ensemble de télécommunication selon des revendications quelconques parmi les précédentes, le boîtier (18) guide-fils comportant une structure (39) destinée à guider des fils.

14. Ensemble de télécommunication selon la revendication 13, la structure (39) étant disposée entre deux parois.

15. Ensemble de télécommunication selon des revendications quelconques parmi les précédentes, le boîtier (18) guide-fils comportant une branche courte (37) et une branche longue (38) disposées selon une configuration en L.
